# EUROPÄISCHE PATENTSCHRIFT

(11) **EP 1 864 908 B1**
(45) Veröffentlichungstag und Bekanntmachung des Hinweises auf die Patenterteilung: **24.12.2008**
(21) Anmeldenummer: 07009154.1
(22) Anmeldetag: 07.05.2007
(51) Int. Cl.: B65B 37/00, B65G 25/12, B65B 1/04, B65B 9/04

(54) **Vorrichtung zur Verteilung von Kleinteilen auf Näpfe aufweisende Füllplatten, Folien oder dergleichen, insbesondere in einer Füllstation**
Device for distributing small parts onto sheets, films or similar with cups, in particular in a filling station
Dispositif de répartition de petites pièces sur des jattes comportant des plaques de remplissage, des feuilles ou analogues, en particulier dans une station de remplissage

(30) Priorität: 10.06.2006 DE 102006027056
(43) Veröffentlichungstag der Anmeldung: 12.12.2007
(73) Patentinhaber: UHLMANN PAC-SYSTEME GmbH & Co. KG, 88471 Laupheim (DE)
(72) Erfinder: Seiffert, Martin, 89601 Schelklingen (DE); Litke, Harald, 88480 Achstetten (DE); Zugenmaier, Diana, 88471 Laupheim (DE); Kohn, Roland, 88477 Orsenhausen (DE)
(74) Vertreter: Hentrich, Swen

(56) Entgegenhaltungen:
- WO-A-97/11884
- DE-A1- 3 513 102
- DE-A1- 3 842 273
- GB-A- 2 250 497
- US-A- 4 018 329

## Beschreibung

Die Erfindung betrifft eine Vorrichtung zur Verteilung von Kleinteilen wie Tabletten, Kapseln, Oblongs und dergl. auf Näpfe aufweisende Füllplatten, Folien oder dergl., insbesondere in einer Füllstation.

Die Leistungsfähigkeit und Zuverlässigkeit heutiger Verpackungsmaschinen für Arzneimittelprodukte sind in hohem Maße auch von der Leistungsfähigkeit und der maximalen Betriebsgeschwindigkeit der in diesen Verpackungsmaschinen eingesetzten Füllstationen abhängig. Hierzu werden in der Praxis vielfältige Vorrichtungen der eingangs genannten Art eingesetzt, die in Form von rotierenden Bürsten, starr angeordneten Abstreifleisten, Vibrationselementen oder dergl. ausgebildet sein können. Der Nachteil dieser Vorrichtungen besteht darin, dass die für die Befüllung der Näpfe aufweisenden Füllplatten, Folien oder dergl. zur Verfügung stehende Fläche nicht vollständig und effizient genutzt wird, so dass die Leistungsfähigkeit der Vorrichtung hierdurch begrenzt wird.

Ziel der Erfindung ist es daher, eine Vorrichtung der eingangs genannten Art so auszubilden, dass die zur Verfügung stehende Füllfläche möglichst effizient genutzt wird.

Diese Aufgabe wird bei einer Vorrichtung der eingangs genannten Art dadurch gelöst, dass zwei parallel angeordnete Stangen axial verschiebbar geführt sind, dass diese um ihre Längsachse rotatorisch verstellbar sind und dass die Rotationsbewegung der Stangen in eine Hubbewegung einer zwischen den freien Enden der Stangen angeordneten Verbindungsleiste umsetzbar ist. Durch die Hubbewegung wird eine gerichtete Manipulation der Kleinteile auf der gesamten zur Verfügung stehenden Füllfläche auf einfache und effiziente Weise ermöglicht. In der Folge können die Kleinteile schneller in die Näpfe der Füllplatten oder Folien einsortiert werden, so dass sich die Leistungsfähigkeit der Füllstation hierdurch weiter steigern lässt.

Für eine schnelle und störungsfreie Verstellung der Stangen ist es von besonderem Vorteil, wenn die einzelne Stange jeweils in einem linear geführten Schlitten drehbar gelagert ist. Hierdurch wird zum einen eine schnelle und präzise definierte axiale Verstellung der einzelnen Stange erreicht, zum anderen wird eine exakt parallele Führung der Stangen zueinander ermöglicht.

Hinsichtlich eines einfachen Aufbaus und eines automatisierten Ablaufs der Drehung ist es günstig, wenn die beiden Stangen in ihren Endlagen rotatorisch verstellbar sind.

Eine besonders bevorzugte Ausführungsform der Erfindung ist dadurch gekennzeichnet, dass die rotatorische Verstellung jeder Stange bei Erreichen der Endlage der jeweiligen Axialbewegung durch das Eingreifen zumindest eines auf der Stange angeordneten spindelförmigen Element in ein Gegenstück vermittelt ist. Durch diese mechanische Zwangsführung des spindelförmigen Elements, und damit der Stange, wird eine reproduzierbare Rotationsbewegung ermöglicht, die durch geeignete Bauform des spindelförmigen Elements und des diesem zugeordneten Gegenstücks in weiten Bereichen variierbar ist. Zudem wird ein selektiver und damit kostengünstiger Austausch der einem Verschleiß unterworfenen Bauteile ermöglicht.

Für eine präzise Kraftübertragung des spindelförmigen Elements auf die Stange sowie eine Begrenzung der axialen Bewegung der Stange ist das spindelförmige Element auf der Stange drehfest angeordnet und gegen axiales Verschieben gesichert. Eine alternative Ausführung der Erfindung, bei der das spindelförmige Element durch nur eine axiale Sicherung gegen Verschieben entgegen der Vorschubrichtung der Stange gesichert ist, ggf. unter Zwischenschaltung einer elastischen Komponente, ist gleichfalls denkbar.

Eine besonders vorteilhafte Auführungsform der erfindungsgemäßen Vorrichtung zeichnet sich dadurch aus, dass das spindelförmige Element zweifach vorgesehen ist und zu beiden Seiten des Schlittens auf der Stange angeordet ist. Durch diese Anordnung wird zum einen die einfache Definition einer Begrenzung der axialen Bewegungen der einzelnen Stange ermöglicht, zum anderen kann der Schlitten durch direkte Anlage der spindelförmigen Elemente an die Stirnflächen des Schlittens ohne weitere Bauteile gegen axiales Verschieben auf der Stange gesichert werden.

Nach besonders bevorzugter Ausgestaltungsform der Erfindung ist der Schlitten durch einen Servomotor oder druckmittelbetätigt, insbesondere mittels eines Pneumatikantriebes antreibbar. Hierdurch lässt sich auf einfache Weise die Geschwindigkeit der axialen Vorwärts- oder Rückwärtsbewegung kontrollieren und die Bewegung bei Erreichen der jeweiligen Endlage gegebenenfalls kontrolliert verlangsamen.

Um eine konstruktiv einfache und sichere Kraftübertragung von dem Servormotor auf den Schlitten zu gewährleisten, ist vorgesehen, dass dem Servomotor und dem Schlitten ein Zahnriemen zwischengeschaltet ist. Hierdurch ist zudem die Möglichkeit gegeben, die Bewegung beider Stangen der erfindungsgemäßen Vorrichtung aus nur einem Antrieb abzuleiten.

Für die Fixierung der Stangen in ihrer jeweiligen Drehlage und somit zur Fixierung der Verbindungsleiste in ihrer relativen Höhe zu den die Näpfe aufweisenden Füllplatten oder Folien ist vorgesehen, dass an dem Schlitten und/oder an dem spindelförmigen Element zumindest ein Mittel zur reversiblen Sicherung der Drehlage der Stange vorgesehen ist. Dieses Mittel kann hierbei erfindungsgemäß durch Magnete und/oder Rastsitze gebildet sein.

Als Alternative zu einer Verstellung nur in den Endlagen der Axialbewegung besteht die Mögichkeit, dass die Stangen jeweils in einer Führungsbuchse geführt sind, die mittels eines Antriebes um ihre Längsachse verdrehbar ist, so dass bei jeder axialen Stellung gewünschtenfalls die rotatorische Verstellung der Stange bewirkt werden kann.

Dazu bietet es sich an, dass der Antrieb durch einen Pneumatikantrieb gebildet ist, der über ein Hebelsystem auf die Führungsbuchse einwirkt, wobei in der Führungsbuchse eine Freischneidung ausgebildet ist, durch die ein Mitnehmer mit der Stange verbunden ist, der dem der axialen Verschiebung dienenden Zahnriemen zugeordnet ist.

Weiterhin vorgesehen ist, dass die translatorische Bewegung der Verbindungsleiste durch eine Exzenterscheibe, die an dem jeweils freien Ende der Stangen angeordet ist, unter Führung in einer Steuerkurve aus der rotatorischen Bewegung der Stangen abgeleitet ist. Hierbei ist es von besonderem Vorteil, wenn an der Exzenterscheibe ein Stift oder Bolzen zum Eingriff in die Steuerkurve angeordet ist und die Exzenterscheibe durch ein lösbares Verbindungselement an dem freien Ende der Stange befestigt ist. Diese einfache Konstruktion ermöglicht einen zuverlässigen und besonders wartungsfreundlichen Betrieb der Vorrichtung, da die einem mechanischen Verschleiß unterworfenen Einzelteile gut zugänglich sind und diese einzeln ausgetauscht werden können. Zudem kann der Umfang der Hubbewegung der Verbindungsleiste durch einfachen Austausch der Exzenterscheibe sowie des die Steuerkurve aufweisenden Bauelements variiert werden.

Für die präzise Führung der Verbindungsleiste zur Ausführung der Hubbewegung ist vorgesehen, dass die Verbindungsleiste ein Langloch aufweist, durch das die Verbindungsleiste bei Rotation der Stangen auf der Stange oder dem Verbindungsstück zwangsgeführt ist.

Um Kleinteile unterschiedlichster Form, Größe und Beschaffenheit auf der Füllebene manipulieren zu können, ist vorgesehen, dass dem Verbindungsprofil eine Bürstenleiste zugeordnet ist. Diese kann in Abhängigkeit der zu manipulierenden Kleinteile einen Bürstenbesatz unterschiedlicher Dichte und Beschaffenheit aufweisen. Zu der erfindungsgemäßen Bürstenleiste bieten sich weitere alternative Ausführungsformen an, die durch rotierende Bürsten, eine Abstreifschiene oder dergl. gebildet sein können.

Im folgenden wird die Erfindung an in der Zeichnung dargestellten Ausführungsbeispielen näher erläutert; es zeigen:
- Fig. 1: eine perspektivische Schrägansicht der Vorrichtung mit zugeordnetem Rahmen,
- Fig. 2: eine detaillierte Schrägansicht der Linearführung,
- Fig. 3: eine der Figur 2 entsprechende Darstellung aus anderer perspektivischer Schrägansicht,
- Fig. 4: eine perspektivische Schrägansicht der Verbindungsleiste in unterster Hubposition,
- Fig. 5: eine der Figur 4 entsprechende Darstellung mit der Verbindungsleiste in oberster Hubposition,
- Fig. 6: aus einer weiteren Ausführungsform die isolierte Darstellung der in einer Führungsbuchse angeordneten Stange, und
- Fig. 7: einen Querschnitt durch die Führungsbuchse im Bereich des Hebelsystems.

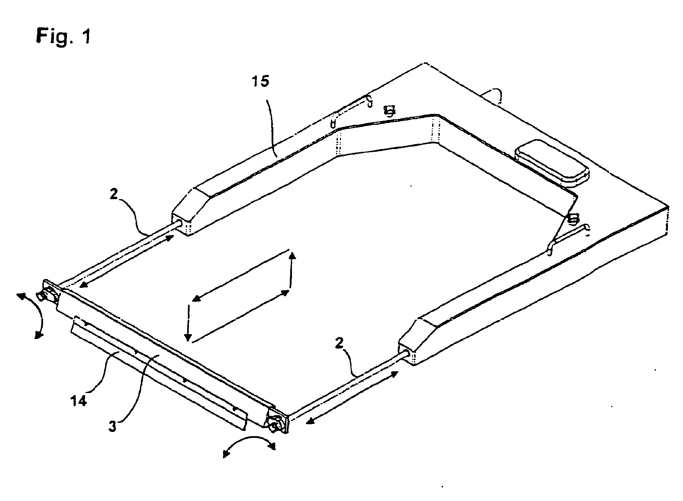

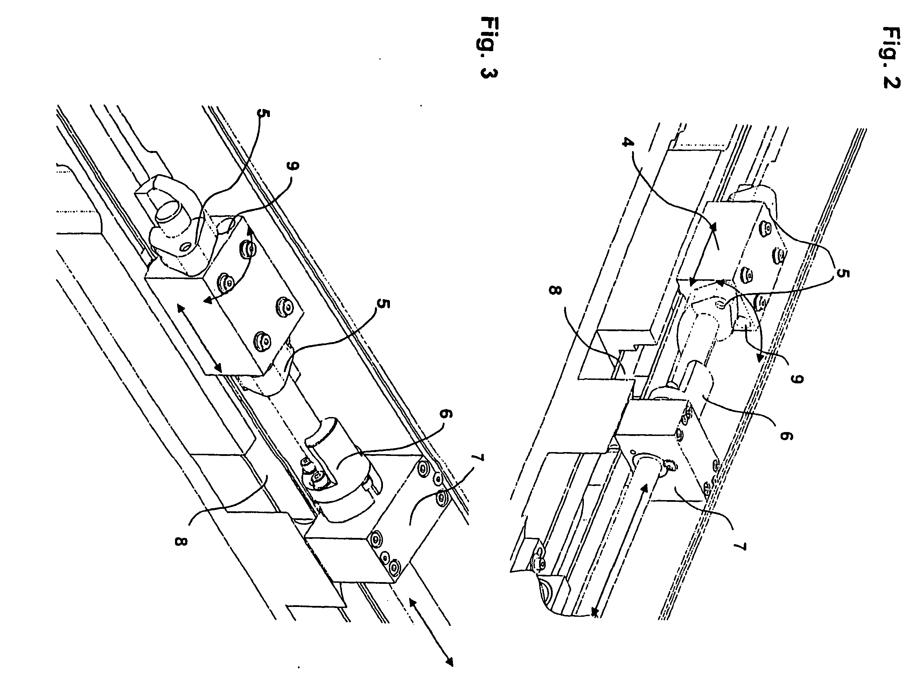

In der Zeichnung ist in den Figuren 1 bis 5 eine Vorrichtung zur Verteilung von Kleinteilen wie Tabletten, Kapseln, Oblongs und dergl. auf Näpfe aufweisende Füllplatten, Folien oder dergl. dargestellt, die insbesondere für den Einsatz in einer Füllstation vorgesehen ist. Dieses Vorrichtung ist dadurch gekennzeichnet, dass zwei parallel angeordnete Stangen 2 axial verschiebbar geführt sind, wobei diese in den beiden Endlagen ihrer Axialbewegung um ihre Längsachse rotatorisch verstellbar sind und die Rotationsbewegung der Stangen in eine translatorische Bewegung einer zwischen den freien Enden der Stangen angeordneten Verbindungsleiste 3 umsetzbar ist. Bei der in der Zeichnung dargestellten Vorrichtung 1 ist die translatorische Bewegung der Verbindungsleiste 3 hierbei eine Hubbewegung. Wie insbesondere aus Figur 2 und 3 zu ersehen ist, wird die einzelne Stange 2 jeweils in einem linear geführten Schlitten 4 drehbar gelagert. Die rotatorische Verstellung jeder Stange 2 bei Erreichen der Endlage der jeweiligen Axialbewegung wird durch das Eingreifen zweier spindelförmiger Elemente 5 in ein Gegenstück 6 vermittelt. Hierbei sind die spindelförmigen Elemente 5 auf der Stange 2 drehfest angeordnet und in beiden Richtungen gegen axiales Verschieben auf der Stange 2 gesichert. Das Gegenstück 6 hingegen ist drehfest auf einem starr mit dem Gehäuse 15 der Linearführung angeordneten Bauteil 7 angeordnet. Bei Erreichen der Endlage der Axialbewegung der Stange 2 wird das spindelförmige Element 5 an dem als Umwerfer fungierenden Gegenstück 6 derart geführt, dass es zu einer Rotation des spindelförmigen Elements 5 und folglich der zugeordneten Stange 2 kommt. Der Schlitten 4 ist in dem hier gezeigten Ausführungsbeispiel durch die beidseits auf der Stange 2 angeordneten spindelförmigen Elemente 5 axial gegen Verschieben auf der Stange 2 gesichert.

Der Antrieb des Schlittens 4 erfolgt durch einen in dieser Zeichnung nicht dargestellten Servomotor unter Vermittlung eines Zahnriemens 8, wobei der Antrieb des in dieser Zeichnung nicht dargestellten korrespondierenden Schlittens 4 ebenfalls über einen Zahnriemen 8 aus diesem Servomotor abgeleitet ist.

Die jeweilige Drehlage der Stange 2 wird durch Magnete 9, die flächenbündig in den Schlitten eingelassen sind und die die Lage des zugeordneten spindelförmigen Elements 5 sichern, fixiert.

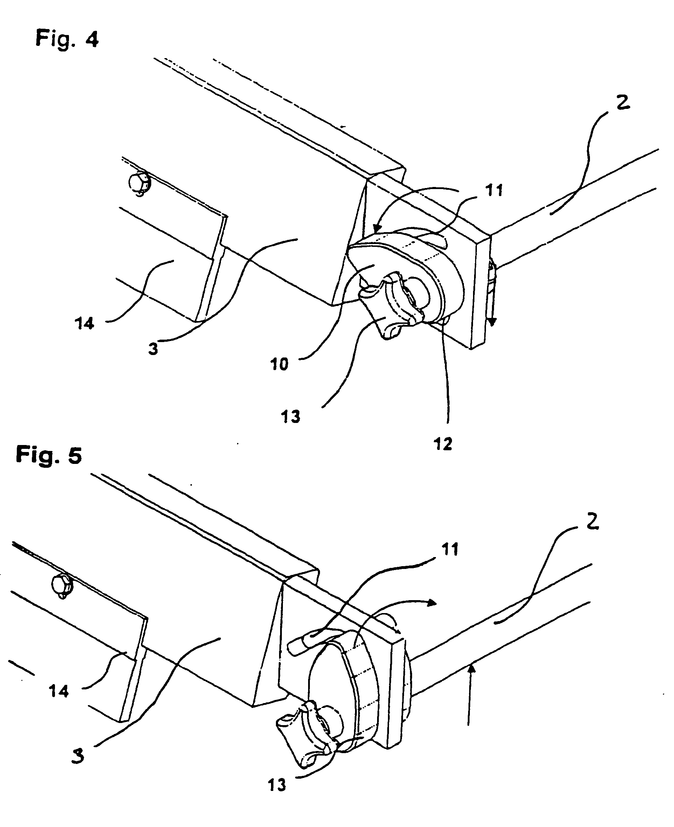

Die translatorische Bewegung der Verbindungsleiste 3 wird, wie in Fig. 4 und 5 ersichtlich, durch eine Exzenterscheibe 10, die an dem jeweils freien Ende der Stange 2 angeordet ist, unter Führung eines an der Exzenterscheibe 10 angeordneten Stiftes in einer Steuerkurve 11 aus der rotatorischen Bewegung der Stangen 2 abgeleitet. Zur zwangsweisen Ausführung einer Hubbewegung der Verbindungsleiste 3 bei gegensätzlicher Rotation der Stangen ist auf dieser jeweils im Bereich der Anlage an die einzelne Stange 2 ein Längsloch 12 angeordnet, das zur vertikalen Führung der Stange auf dem Zylinder des Verbindungselementes dient. Die Exzenterscheibe 10 ist hierbei durch eine lösbare Rändelschraube 13 auf dem freien Ende der jeweiligen Stange 2 befestigt, so daß ein Austausch der Komponenten leicht vorgenommen werden kann. Zur Manipulation der Kleinteile ist der Verbindungsleiste 3 in dem hier gezeigten Ausführungsbeispiel eine Bürstenleiste 14 zugeordnet. Während eines Bewegungszyklus der Vorrichtung werden die Stangen 2 aus dem Gehäuse 15 herausbewegt, die Verbindungsleiste 3 am Endpunkt der Bewegung vertikal in Richtung der Füllfläche abgesenkt, die Stangen 2 mit der abgesenkten Verbindungsleiste 3 in Richtung auf das Gehäuse 15 zurückbewegt und die Verbindungsleiste 3 nachfolgend bei Erreichen des hinteren Endpunkts der Bewegung relativ zur Füllfläche angehoben.

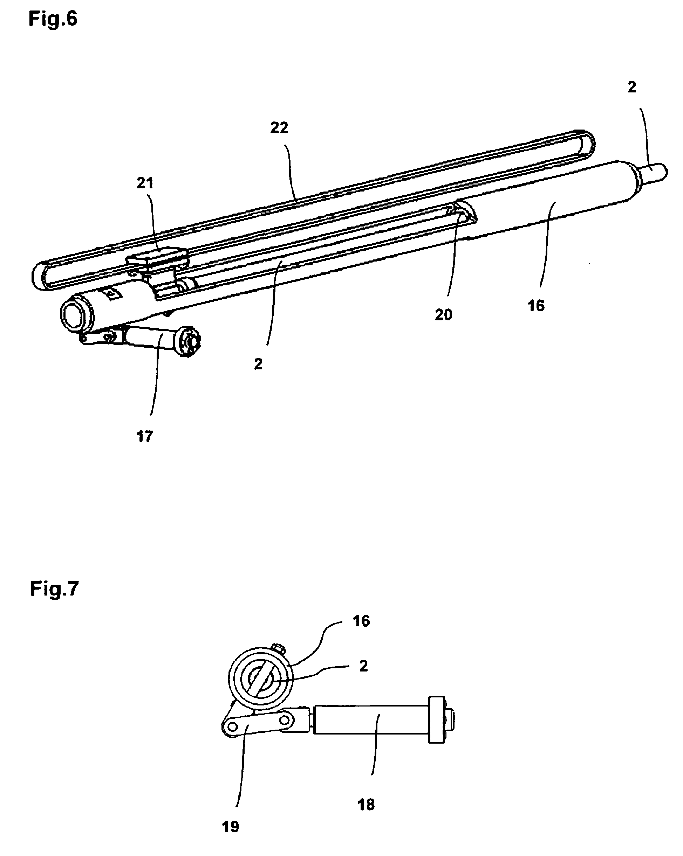

In den Figuren 6 und 7 ist gemäß einer weiteren Ausführungsform dargestellt, dass die rotatorische Verstellung der Stangen 2 nicht zwingend nur in den Endlagen ihrer Axialbewegung erfolgen muß, wozu die Stangen 2 jeweils in einer Führungsbuchse 16 geführt sind, die mittels eines Antriebes 17 um ihre Längsachse verdrehbar ist, wobei der Antrieb 17 durch einen Pneumatikantrieb 18 gebildet ist, der über ein Hebelsystem 19 auf die Führungsbuchse 16 einwirkt.

Die Axialbewegung der Stange 2 wird erzeugt, indem in der Führungsbuchse 16 eine Freischneidung 20 ausgebildet ist, durch die ein Mitnehmer 21 mit der Stange 2 verbunden ist, der einem der axialen Verschiebung dienenden Zahnriemen 22 zugeordnet ist.

## Patentansprüche

1. Vorrichtung zur Verteilung von Kleinteilen wie Tabletten, Kapseln, Oblongs oder dergl. auf Näpfe aufweisende Füllplatten, Folien oder dergl., insbesondere in einer Füllstation, **dadurch gekennzeichnet, dass** zwei parallel angeordnete Stangen (2) axial verschiebbar geführt sind, dass diese um ihre Längsachse rotatorisch verstellbar sind und dass die Rotationsbewegung der Stangen (2) in eine Hubbewegung einer zwischen den freien Enden der Stangen angeordneten Verbindungsleiste (3) umsetzbar ist.

2. Vorrichtung nach Anspruch 1, **dadurch gekennzeichnet, dass** die Stange (2) in einem linear geführten Schlitten (4) drehbar gelagert ist.

3. Vorrichtung nach Anspruch 1 oder 2, **dadurch gekennzeichnet, dass** die Stangen (2) in den beiden Endlagen ihrer Axialbewegung rotatorisch verstellbar sind.

4. Vorrichtung nach Anspruch 3, **dadurch gekennzeichnet, dass** die rotatorische Verstellung jeder Stange (2) bei Erreichen der Endlage der jeweiligen Axialbewegung durch das Eingreifen zumindest eines auf der Stange angeordneten spindelförmigen Elements (5) in ein Gegenstück (6) vermittelt ist.

5. Vorrichtung nach Anspruch 4, **dadurch gekennzeichnet, dass** das spindelförmige Element (5) auf der Stange (2) drehfest angeordnet ist und gegen axiales Verschieben gesichert ist.

6. Vorrichtung nach Anspruch 4 oder 5, **dadurch gekennzeichnet, dass** das spindelförmige Element (5) zweifach vorgesehen ist und zu beiden Seiten des Schlittens (4) auf der Stange (2) angeordnet ist.

7. Vorrichtung nach einem der Ansprüche 1 bis 6, **dadurch gekennzeichnet, dass** der Schlitten (4) durch einen Servomotor oder druckmittelbetätigt, insbesondere mittels eines Pneumatikantriebes, angetrieben ist.

8. Vorrichtung nach Anspruch 7, **dadurch gekennzeichnet, dass** dem Servomotor und dem Schlitten (4) ein Zahnriemen (8) zwischengeschaltet ist.

9. Vorrichtung nach einem der Ansprüche 6 bis 8, **dadurch gekennzeichnet, dass** an dem Schlitten (4) und/oder an dem spindelförmigen Element (5) zumindest ein Mittel (9) zur reversiblen Sicherung der Drehlage der Stange (2) vorgesehen ist.

10. Vorrichtung nach Anspruch 9, **dadurch gekennzeichnet, dass** das Mittel (9) zur Sicherung der Drehlage der Stange durch einen Magnet und/oder einen Rastsitz gebildet ist.

11. Vorrichtung nach Anspruch 1, **dadurch gekennzeichnet, dass** die Stangen (2) jeweils in einer Führungsbuchse (16) geführt sind, die mittels eines Antriebes (17) um ihre Längsachse verdrehbar ist.

12. Vorrichtung nach Anspruch 11, **dadurch gekennzeichnet, dass** der Antrieb (17) durch einen Pneumatikantrieb (18) gebildet ist, der über ein Hebelsystem (19) auf die Führungsbuchse (16) einwirkt.

13. Vorrichtung nach Anspruch 11 oder 12, **dadurch gekennzeichnet, dass** in der Führungsbuchse (16) eine Freischneidung (20) ausgebildet ist, durch die ein Mitnehmer (21) mit der Stange (2) verbunden ist, der einem der axialen Verschiebung dienenden Zahnriemen (22) zugeordnet ist.

14. Vorrichtung nach einem der Ansprüche 1 bis 13, **dadurch gekennzeichnet, dass** die Hubbewegung der Verbindungsleiste (3) durch eine Exzenterscheibe (10), die an dem jeweils freien Ende der Stangen (2) angeordnet ist, unter Führung in einer Steuerkurve (11) aus der rotatorischen Bewegung der Stangen (2) abgeleitet ist.

15. Vorrichtung nach Anspruch 14, **dadurch gekennzeichnet, dass** an der Exzenterscheibe (10) ein Stift oder Bolzen zum Eingriff in die Steuerkurve (11) angeordnet ist.

16. Vorrichtung nach Anspruch 14 oder 15, **dadurch gekennzeichnet, dass** die Exzenterscheibe (10) durch ein lösbares Verbindungselement (13) an dem freien Ende der Stange (2) befestigt ist.

17. Vorrichtung nach einem der Ansprüche 1 bis 16, **dadurch gekennzeichnet, dass** die Verbindungsleiste (3) ein Langloch (12) aufweist, durch das die Verbindungsleiste bei Hubbewegung auf der Stange (2) oder dem Verbindungselement (13) vertikal geführt ist.

18. Vorrichtung nach einem der Ansprüche 1 bis 17, **dadurch gekennzeichnet, dass** der Verbindungsleiste (3) eine Bürstenleiste (14) zugeordnet ist.

## Claims

1. Apparatus for distributing small articles such as tablets, capsules, oblongs or the like on to filling plates, sheets or the like having cups, in particular in a filling station, **characterised in that** two rods (2) arranged parallel are axially displaceably guided, that the rods are displaceable in rotation about their longitudinal axis and that the rotational movement of the rods (2) can be converted into a stroke movement of a connecting bar (3) arranged between the free ends of the rods.

2. Apparatus according to claim 1 **characterised in that** the rod (2) is mounted rotatably in a linearly guided slide (4).

3. Apparatus according to claim 1 or claim 2 **characterised in that** the rods (2) are displaceable in rotation in the two end positions of their axial movement.

4. Apparatus according to claim 3 **characterised in that** the rotational displacement of each rod (2) upon the attainment of the end position of the respective axial movement is brought about by the engagement of at least one element in spindle form (5) arranged on the rod into a counterpart portion (6).

5. Apparatus according to claim 4 **characterised in that** the element (5) in spindle form is arranged non-rotatably on the rod (2) and is prevented from axial displacement.

6. Apparatus according to claim 4 or claim 5 **characterised in that** the element (5) in spindle form is provided in duplicate and is arranged at both sides of the slide (4) on the rod (2).

7. Apparatus according to one of claims 1 to 6 **characterised in that** the slide (4) is driven by a servo motor or is pressure fluid-actuated, in particular by means of a pneumatic drive.

8. Apparatus according to claim 7 **characterised in that** a toothed belt (8) is connected between the servo motor and the slide (4).

9. Apparatus according to one of claims 6 to 8 **characterised in that** at least one means (9) for reversibly securing the rotary position of the rod (2) is provided on the slide (4) and/or the element (5) in spindle form.

10. Apparatus according to claim 9 **characterised in that** the means (9) for securing the rotary position of the rod is formed by a magnet and/or a latching engagement.

11. Apparatus according to claim 1 **characterised in that** the rods (2) are each guided in a respective guide sleeve (16) rotatable by means of a drive (17) about its longitudinal axis.

12. Apparatus according to claim 11 **characterised in that** the drive (17) is formed by a pneumatic drive (18) acting on the guide sleeve (16) by way of a lever system (19).

13. Apparatus according to claim 11 or claim 12 **characterised in that** provided in the guide sleeve (16) is a cut-out (20), through which an entrainment portion (21) is connected to the rod (2), the entrainment portion being associated with a toothed belt (22) serving for axial displacement.

14. Apparatus according to one of claims 1 to 13 **characterised in that** the stroke movement of the connecting bar (3) is derived from the rotational movement of the rods (2) by an eccentric disc (10) arranged at the respective free end of the rods (2), with guidance in a control cam (11).

15. Apparatus according to claim 14 **characterised in that** a pin or bolt for engagement into the control cam (11) is arranged on the eccentric disc (10).

16. Apparatus according to claim 14 or claim 15 **characterised in that** the eccentric disc (10) is fixed to the free end of the rod (2) by a releasable connecting element (13).

17. Apparatus according to one of claims 1 to 16 **characterised in that** the connecting bar (3) has a slot (12), by which the connecting bar is guided vertically in the stroke movement on the rod (2) or the connecting element (13).

18. Apparatus according to one of claims 1 to 17 **characterised in that** a brush bar (14) is associated with the connecting bar (3).

## Revendications

1. Dispositif de répartition de petites pièces telles que des tablettes, des capsules, des comprimés ou similaires sur des plaques de remplissage, des feuilles ou similaires comportant des godets, notamment dans une station de remplissage, **caractérisé en ce que** deux tiges parallèles (2) peuvent coulisser axialement, et qu'elles peuvent tourner autour de leurs axes longitudinaux avec transformation de ce mouvement de rotation en une course d'une barrette de liaison (3) montée entre les extrémités libres des deux tiges.

2. Dispositif selon la revendication 1, **caractérisé en ce que** chaque tige (2) peut tourner dans un coulisseau (4) à mouvement linéaire.

3. Dispositif selon la revendication 1 ou 2, **caractérisé en ce que** les tiges (2) peuvent se déplacer en rotation aux deux fins de course de leur déplacement axial.

4. Dispositif selon la revendication 3, **caractérisé en ce que** le déplacement en rotation de chaque tige (2) quand elle arrive en fin de course axiale est assuré par la venue en prise dans une pièce d'opposition (6), d'un élément (5) en forme de broche monté sur la tige.

5. Dispositif selon la revendication 4, **caractérisé en ce que** l'élément (5) en forme de broche est solidaire en rotation de la tige (2) et qu'il ne peut coulisser axialement.

6. Dispositif selon la revendication 4 ou 5, **caractérisé en ce que** l'élément (5) en forme de broche est double, et qu'il est disposé sur la tige (2) des deux côtés du coulisseau (4).

7. Dispositif selon une des revendications 1 à 6, **caractérisé en ce que** le coulisseau (4) est entraîné par un servomoteur ou par un agent de pression, notamment par l'intermédiaire d'un entraînement pneumatique.

8. Dispositif selon la revendication 7, **caractérisé en ce qu'**entre le servomoteur et le coulisseau (4) est intercalée une courroie crantée (8).

9. Dispositif selon une des revendications 6 à 8, **caractérisé en ce qu'**il est prévu sur le coulisseau (4) et/ou sur l'élément (5) en forme de broche au moins un moyen (9) pour garantir de manière réversible la position de rotation de la tige (2) .

10. Dispositif selon la revendication 9, **caractérisé en ce que** le moyen (9) pour garantir de manière réversible la position de rotation de la tige (2) est constitué par un aimant et/ou un siège d'arrêt.

11. Dispositif selon la revendication 1, **caractérisé en ce que** chaque tige (2) se déplace dans une douille de guidage (16) qu'un entraînement (17) peut faire tourner autour de son axe.

12. Dispositif selon la revendication 11, **caractérisé en ce que** l'entraînement (17) peut être un entraînement pneumatique (18) qui agit sur la douille de guidage (16) par un système de leviers (19).

13. Dispositif selon la revendication 11 ou 12, **caractérisé en ce que** dans la douille de guidage (16) est réalisée une découpe (20) à travers laquelle un entraîneur (21) est relié à la tige (2) à laquelle est associée une courroie crantée (22) servant à assurer le coulissement axial.

14. Dispositif selon une des revendications 1 à 13, **caractérisé en ce que** la course de la barrette de liaison (3) est dérivée avec guidage dans une piste de commande (11), du mouvement de rotation des tiges (2) par l'intermédiaire d'un disque excentrique (10) monté sur l'extrémité libre de chaque tige (2).

15. Dispositif selon la revendication 14, **caractérisé en ce que** le disque excentrique (10) porte une tige ou un téton engagé dans la piste de commande (11).

16. Dispositif selon la revendication 14 ou 15, **caractérisé en ce que** le disque excentrique (10) est fixé à l'extrémité libre de la tige (2) par un élément de liaison (13) amovible.

17. Dispositif selon une des revendications 1 à 16, **caractérisé en ce que** la barrette de liaison (3) présente un trou allongé (12) qui assure son guidage vertical sur la tige ou sur l'élément de liaison (13) lors du déplacement.

18. Dispositif selon une des revendications 1 à 17, **caractérisé en ce que** l'élément de liaison (3) est une barrette à brosse (14).
